# EUROPÄISCHE PATENTSCHRIFT

(11) **EP 1 154 893 B1**
(45) Veröffentlichungstag und Bekanntmachung des Hinweises auf die Patenterteilung: **03.09.2003**
(21) Anmeldenummer: 00901601.5
(22) Anmeldetag: 28.01.2000
(51) Int. Cl.: B29C 70/46, B29B 15/10

(54) **FORMKÖRPER**
MOULDED ARTICLE
CORPS MOULES

(30) Priorität: 17.02.1999 CH 30099
(43) Veröffentlichungstag der Anmeldung: 21.11.2001
(73) Patentinhaber: Alcan Technology & Management AG, 8212 Neuhausen am Rheinfall (CH)
(72) Erfinder: HINTERMANN, Martin, CH-9315 Neukirch (CH)
(86) Internationale Anmeldenummer: EP0000648
(87) Internationale Veröffentlichungsnummer: WO00048824

(56) Entgegenhaltungen:
- EP-A- 0 302 989
- EP-A- 0 630 735
- EP-A- 0 835 741

## Beschreibung

Vorliegende Erfindung betrifft faserverstärkte Formkörper geformt aus einem textilen Flächengebilde als Gewebe aus wenigstens zwei Fasermaterialien und ein Verfahren zu deren Herstellung und deren Verwendung, gemäss dem Oberbegriff von Anspruch 1.

Es ist bekannt, Formteile z.B. durch aus glasmatten verstärkten Thermoplasten zu fertigen. Dazu werden eine Thermoplast-Formmasse und Glasfasermatten in einem Pressverfahren zu einem Faserverbundwerkstoff verarbeitet. Dieses Verfahren ist vorwiegend für die Herstellung von tafelförmigem Halbzeug geeignet. Nachteilig ist, im wesentlichen nur glattflächige oder blechförmige Strukturen erzeugt werden können. Strukturierte Formkörper oder Bauteile lassen sich nicht oder nur indirekt über die glattflächigen blechförmigen Strukturen in einem zusätzlichen Umformschritt herstellen.

Der nächste Stand der Technik, die EP 630 735, offenbart zu textilen Flächengebilden verarbeitbares Hybridgarn aus zwei thermoplastischen Fasermaterialen. In einem Pressvorgang wird das textile Flächengebilde zu einem faserverstärkten Kunststoffteil überführt, wobei ein erstes, vorzugsweise als Stapelfasern vorliegendes Fasermaterial unter Druck- und.Hitzeeinwirkung aufschmilzt und zum matrixbildenden Material übergeht, während ein zweites, streckbares, vorzugsweise als Endlosfasern vorliegendes Fasermaterial als Verstärkungsmaterial im Kunststoffteil verbleibt.

Die EP 835 741 beschreibt die Herstellung einer Vorform, welche ein Verstärkungsmaterial in Form von Rovings aus Stapelfasem enthält, wobei die Fasern der Rovings höchstens eine leichte Vedrehung gegeneinander aufweisen. Die Vorform aus gerichteten oder ungerichteten Rovings wird mit einem Matrixmaterial imprägniert und zu faserverstärkten Kunststoffteilen verarbeitet.

Die EP 302 989 beschreibt ein aus Garnen gefertigtes Gewebe zur Herstellung von Faserverstärkten Kunststoffteilen. Das Gewebe enthält unterschiedliche Garne aus einem ersten und zweiten Material. Die Garne aus einem ersten Material bestehen aus matrixbildendem Material und gehen unter Druck- und Hitzeeinwirkung bei der Herstellung des Kunststoffteils in ein Matrixstruktur über. Die Garne aus dem zweiten Material bilden die Faserverstärkung im Kunststoffteil aus.

Aufgabe vorliegender Erfindung ist es, diese Nachteile zu vermeiden und insbesondere Formkörper sowie ein Verfahren zu deren Herstellung zu schaffen, die ausgehend von einem Fasermaterial in einem Arbeitsgang und in kurzen Bearbeitungszeiten zu Fonnkörpem oder Bauteilen führen.

Erfindungsgemäss wird dies durch einen faserrerstärkten Formkörper nach Anspruch 1 erreicht.

Die textilen Flächengebilde können gerichtete Fasern in unidirektionalen Lagen, in bidirektionalen Lagen, als geschnittene Rovings, Gelege, Gewebe oder Gewirke sein.

Zweckmässig weisen die Stapelfasern des ersten Materials eine mittlere Länge von 10 bis 150 mm, zweckmässig 30 bis 120 mm, vorzugsweise 60 bis 100 mm und insbesondere 75 bis 85 mm auf.

Zweckmässig weisen die Stapelfasern des zweiten Materials eine mittlere Länge von 10 bis 150 mm, zweckmässig 30 bis 120 mm, vorzugsweise 60 bis 100 mm und insbesondere 75 bis 85 mm auf.

Insbesondere enthalten die texilen Flächengebilde Stapelfasern aus dem ersten und dem zweiten Material mit jeweils einer mittleren Länge von 75 bis 85 mm.

Die Stapelfasern aus dem ersten thermoplastischen Material können beispielsweise Polyamide, Polyester, Polycarbonate, Polyurethane, Polyharnstoff, Polyolefine, Polystyrole, Polyacrylnitrile, Polyvinylchlorid, Polyvinylidenchlorid, Polyvinylalkohol oder Polytetrafluorethylen enthalten oder daraus bestehen. Bevorzugt sind Stapelfasern aus Polyamiden, wie Polyamid 6, Polyamid 6,6, Polyamid 11 oder insbesondere Polyamid 12.

Die Stapelfasern aus dem zweiten Material sind z.B. hochtemperaturbeständige anorganische oder organische Fasern. Beispielsweise können organische Stapelfasern vollaromatische Polyamide, Aramide, Heterocyclen enthaltende aromatische Polyamide, Polyimide, Polyimidamide, Polybenzimidazole, Polyoxdiazole, Polytriazole, Polythiadiazole, Polybenzoxazole, Polychinazolidine, Poly-bis-benzimidazolbenzophenanthrolin oder chelatiertes Polyterephthaloyl-oxalamidrazon enthalten oder daraus bestehen. Weitere Beispiele sind anorganische Stapelfasern die zweckmässig Glas, Schlacke, Stein, Keramik, Quarz, Kieselglas, Bor, Siliciumcarbid, Bomitrid, Borcarbid, Aluminiumoxid, Zirkoniumoxid, Stahl, Aluminium, Wolfram, Kohlenstoff oder Graphit enthalten oder daraus bestehen oder es kann einkristalliner Korund oder einkristallines Siliciumcarbid sein. Bevorzugt sind Stapelfasern aus Glas, Kohlenstoff oder Graphit. Weitere Beispiele sind Stapelfasern aus Naturstoffen, die zweckmässig Baumwolle, Wolle, Seide, oder Fasern aus Jute, Sisal, Kokos, Leinen oder Hanf usw. enthalten oder daraus bestehen.

Zur Steuerung ihrer Eigenschaften können die Stapelfasern aus thermoplastischen Material, wie auch insbesondere die Stapelfasern aus organischen Werkstoffen aus dem zweiten Material feuerhemmende Zusätze, Pigmente, Farbstoffe, Füllstoffe usw. enthalten.

Der Temperaturbereich des Erweichungs-, Schmelz- oder Zersetzungspunkt der Stapelfasern aus dem zweiten Material liegt beispielsweise derart gewählt, dass dieser wenigstens 5 %, zweckmässig 10 % und insbesondere 30 % über dem Erweichungs- oder Schmelzpunkt des ersten Materials liegt.

Im Formkörper nach vorliegender Erfindung sind die Stapelfasern aus dem zweiten Material als gerichtete Fasern in unidirektionalen Lagen, in bidirektionalen Lagen, als geschnittene Rovings, Gelege, Gewebe oder Gewirke, in der Matrix, die das wiedererstarrte Produkt aus in einen plastischen Zustand überführten Stapelfasern aus dem thermoplastischen ersten Material ist, eingebettet. Dabei bleibt die Faserorientierung des ursprünglichen textilen Flächengebilde gestreckt sein. Die textilen Flächengebilde aus gerichteten Fasern in unidirektionalen Lagen, in bidirektionalen Lagen, die geschnittenen Rovings, Gelege, Gewebe oder Gewirke können in einer oder mehreren Lagen, z.B. 1-, 2-, 3-, 4-, 5- usw. lagig eingesetzt werden, entsprechend der gewünschten Enddicke und Festigkeit der Formkörper. Die Streckung von beispielsweise bis zu 20 % lässt sich vorteilhaft bei 1-lagigen textilen Flächengebilden verwirklichen, während sich Streckungen bis zu 35 % und höher vorteilhaft mit mehrlagigen, beispielsweise 4-lagigen, textilen Flächengebilden vorteilhaft ausführen lassen. Die textilen Flächengebilde können beispielhaft eine Dichte von 100 bis 1000 g/m² aufweisen.

Im vorliegenden Formkörper betreffen die Stapelfasern aus dem zweiten Material, bezogen auf das Volumen, 40 bis 70 %, zweckmässig 50 bis 60 % und vorzugsweise 53 bis 59 %, und entsprechend betrifft die Matrix aus dem thermoplastischen ersten Material, bezogen auf das Volumen, 60 bis 30 %, zweckmässig 50 bis 40 % und vorzugsweise 47 bis 41 %.

Vorliegende Erfindung umfasst auch textile Flächengebilde aus gerichteten Fasern in unidirektionalen Lagen, bidirektionalen Lagen, als geschnittene Rovings, Gelege, Gewebe oder Gewirke aus einem Gemisch von Stapelfasern aus wenigstens zwei Materialien, wobei die Stapelfasern aus wenigstens einem thermoplastischen ersten Material in Anteilen von 60 bis 30 %, bezogen auf das Volumen, vorliegen und die Stapelfasern aus wenigstens einem zweiten Material in Anteilen von 40 bis 70 %, bezogen auf das Volumen, vorliegen, zur Herstellung der erfindungsgemässen Formkörper. Die Stapelfasern sind in einem Hybridgarn oder einem gemischten Garn aus dem ersten Material oder den ersten Materialien und dem zweiten Material oder den zweiten Materialien. Das Hybridgarn aus den Stapelfasern wird zu einem Gewebe verarbeitet. Das Gewebe kann ein 1 - 1, 1 - 2, 1 - 3, 1 - 4, 1 - 5, usw. -Gewebe sein. D.h. die Schussfäden können jeweils 1, 2, 3, 4, 5 usw. Kettfäden wechselnd unter- resp. übergreifen. Die Faserorientierung kann beispielsweise 0°/90° sein. Besonders bevorzugt ist ein Satin-4-1-Gewebe. Die textilen Flächengebilde können in 1, 2, 3, 4, 5 usw. Lagen eingesetzt werden, wobei 1-, 2-, 3-, 4- oder 5-lagige Gewebe bevorzugt werden. Entsprechend der Enddicke des Formkörpers können auch eine höhere Zahl von Lagen angewendet werden oder innerhalb eines Formkörpers kann die Zahl der Lagen variieren. Beispielsweise können am fertigen Formteil stark beanspruchte Bereiche durch eine Vielzahl von Lagen stärker ausgestaltet werden, während wenig beanspruchte Bereiche durch eine oder einige wenige Lagen aufgebaut sind. Bei 2 und mehr Lagen kann die Faserorientierung der einzelnen Lagen gleich oder gegeneinander verdreht und/oder versetzt angeordnet sein.

Die gerichteten Fasern in unidirektionalen Lagen, bidirektionalen Lagen, als geschnittene Rovings, Gelege, Gewebe oder Gewirke und dabei insbesondere die Stapelfasern aus dem zweiten Material können an ihrer Oberfläche mit Haftvermittlern, wie haftmittelhaltige Schlichten, Kunststoffschlichten, wie PA 6,6-Schlichten, etc., ausgerüstet sein. Die gerichteten Fasern in unidirektionalen Lagen, bidirektionalen Lagen, als geschnittene Rovings, Gelege, Gewebe oder Gewirke aus einem Gemisch von Stapelfasern aus wenigstens zwei Materialien können vor der Formgebung einem Trocknungsprozess unterworfen werden, wobei die Trocknung bei erhöhter Temperatur, beispielsweise bei Temperaturen in einem Bereich von 60 bis 110°C, und/oder im Vakuum, beispielsweise bei 100 bis 500 mbar, durchgeführt werden kann.

Die erfindungsgemässen Formkörpern geformt aus textilen Flächengebilden mit gerichteten Fasern als Gewebe aus wenigstens zwei Fasermaterialien sind herstellbar dadurch, dass das Gewebe aus einem Gemisch von Stapelfasern aus wenigstens zwei Materialien ist, wobei das Gewebe aus einem Hybridgarn aus Stapelfasern ist und die Stapelfasern des Hybridgarns aus einem ersten Material oder aus ersten Materialien und aus einem zweiten oder aus zweiten Materialien sind, und die Stapelfasern aus wenigstens einem thermoplastischen ersten Material mit 60 bis 30 % Anteil, bezogen auf das Volumen, und wenigstens einem zweiten Material aus anorganischen Fasern mit 40 bis 70 % Anteil, bezogen auf das Volumen, sind, vorgeheizt, bis das erste Material erweicht oder aufgeschmolzen ist und anschliessend in ein Werkzeug gebracht und unter Druckbeaufschlagung zur Formgebung bei konstanter erhöhter Temperatur von Werkzeug und Stempel, die in einen Bereich unterhalb des Erweichungs- oder Schmelzpunkt des ersten Materials liegt, zum Formkölper verformt wird.

Das Pressverfahren erfolgt in einem Werkzeug oder Matrize und unter Druckbeaufschlagung mittels eines Stempels oder Patrize zur Formgebung und bei Temperaturen des Stempels und des Werkzeuges unterhalb der Erweichungs- oder Schmelztemperaturen des ersten Materials. Dieses Verfahren wird auch Cold-Stamping-Process genannt.

Das Vorheizen kann durch Strahlung, wie IR-Strahlung, durch Konvektion usw, erfolgen. Die Vorheiztemperatur richtet sich nach der Schmelztemperatur des ersten Materials und liegt über dem Schmelzpunkt des ersten Materials und unter einem Erweichungs-, Schmelz- oder Zersetzungspunkt des zweiten Materials. Beispielsweise für ein Polyamid 12 als erstes Material kann eine Vorheiztemperatur von bis zu 250°C angewendet werden. Das textile Flächengebilde kann z.B. auf einen Rahmen aufgelegt oder in einen Rahmen gespannt durch Strahlung erhitzt werden oder kann auf einer Wärmequelle aufliegend durch Kontaktheizung aufgeheizt werden. In letzterem Falle muss ein Kleben des ersten Materials an der beheizten Auflage verhindert werden. Beim Vorheizen muss die Temperatur des textilen Flächengebildes bis zur plastischen Verformung oder dem Schmelzen des ersten Materials erhöht werden. Das vorbeheizte textile Flächengebilde mit dem erweichten oder geschmolzenen ersten Material wird plastisch verformt, zumindest soweit, dass dessen Faserstruktur verschwindet und sich eine Matrix bildet, während die Stapelfasern des zweiten Materials ihre Faserstruktur und Faserorientierung - eingebettet in die Matrix -- behalten. D.h. es findet ein Konsolidierung statt. Das vorbeheizte textile Flächengebilde wird dann dem nächsten Behandlungsschritt zugeführt.

Bei der Form kann es sich beispielsweise um ein Werkzeug, Gesenk oder um eine Matrize handeln. Die Stapelfasern können als konsolidiertes vorbeheiztes textiles Flächengebilde in Form gerichteter Fasern in unidirektionalen Lagen, bidirektionalen Lagen, als geschnittene Rovings, Gelege, Gewebe oder Gewirke aus dem Gemisch von Stapelfasern in das Werkzeug, auch Gesenk oder Matrize genannt, eingelegt oder aufgelegt und mittels eines starren oder elastischen Stempels, auch Patrize genannt, mit Druck beaufschlagt werden. Die Verformung kann bei im wesentlichen konstant bleibender erhöhter Temperatur von Werkzeug oder von Werkzeug und Stempel durchgeführt werden. Die Temperatur von Werkzeug oder von Werkzeug und Stempel liegt vorteilhaft leicht unter der Erweichungs- oder Schmelztemperatur des ersten Materials. Die Restwärme aus dem vorbeheizten textilen Flächengebilde, resp. der Matrix enthaltend die Stapelfasern aus dem zweiten Material, soll für den Verformungschritt ausreichend sein. Beim Verformungsschritt wird im wesentlichen der Matrix und den darin eingebetteten Stapelfasern aus dem zweiten Material die Form des Werkzeuges und des Stempels unter Bildung des Formkörpers aufgezwungen. Zwischen Werkzeug und Stempel erfolgt eine teilweise Abkühlung, wobei die gebildete Matrix aus dem ersten Material erstarrt. Danach kann der Formkörper bereits dem Werkzeug entnommen werden. Die Abkühlung auf Umgebungstemperatur kann ausserhalb der Pressform erfolgen. Die Verweilzeit in der Presse für die Verformung kann beispielsweise unter 20 sec., vorteilhaft unter 10 sec. und insbesondere bei 3 bis 6 sec. liegen. Eine typische Verweilzeit ist 5 sec. Diese Verweilzeiten ermöglichen eine hohe Taktfrequenz bei der seriellen Herstellung von Formkörpern.

Durch den Pressdruck verformen sich die textilen Flächengebilde aus gerichteten Fasern in unidirektionalen Lagen, bidirektionalen Lagen, als geschnittene Rovings, Gelege, Gewebe oder Gewirke entsprechend der Negativform des Werkzeuges und des Stempels. Bevorzugt wird ein isostatisches Pressen. Vorteilhaft erfolgt das isostatische Pressen mittels eines gummielastischen Stempels. Damit lassen sich beispielsweise Formkörper mit Bodenteil und schrägstehenden oder senkrechten Seitenwänden formen oder bei mehrteiligen Werkzeugen lassen sich auch Hinterschneidungen ausbilden. Die Verformung kann nach dem Prinzip des Tiefziehens, d.h. der Verformung unter Nachziehen des Materials bei gleichbleibender Materialdicke, des Streckziehens, d.h. durch Festlegen des Materials entlang seiner Seitenränder mittels eines Niederhalters und Strecken des Materials unter Dickenabnahme, einer Kombination aus Streck- und Tiefziehen, d.h. eines nur teilweisen Nachziehens des zu verformenden Materials, oder durch Vakuumverformung erfolgen. Bevorzugt ist das Streckziehen. Beim Strecken während des Streckziehens oder kombinierten Streck- und Tiefziehens unterliegen die Stapelfasern des zweiten Materials - aufgenommen in der Matrix gebildet aus dem ersten Material - einer Verlängerung unter gleichzeitiger Dickenabnahme. Die Einzelfasern oder Fibrillen, welche die Stapelfasern bilden, sind vom plastischen oder geschmolzenen thermoplastischen ersten Material im wesentlichen umhüllt und, unterstützt aus einem daraus resultierenden Fasergleiteffekt, erfolgt in einem Fasergleitprozess die Verlängerung unter Dickenabnahme der Stapelfaser.

Für das Tiefziehen und/oder Streckziehen kann beispielsweise ein Ziehverhältnis Ω von 1 bis 3, vorzugsweise von 1,2 bis 2,1 und insbesondere von 1,8 bis 2,0 angewendet werden. Das Ziehverhältnis Ω ist der Quotient von abgelegter Länge a zu gestreckter Länge b. Das Ziehverhältnis folgt somit der Formel Ω = a/b. Die abgelegte Länge a entspricht der tatsächlichen Wandlänge des Formkörpers, die gestreckte Länge b entspricht der Länge der Projektion des Formkörpers.

Das Werkzeug oder die Matrize ist heizbar. Zumindest die verformungsaktive Oberfläche kann zur leichten Entformung aus Chrom, Chromstahl, Nickel, Teflon, Nickel-Teflon usw. sein. Die metallischen Oberflächen sind zweckmässig glatt und insbesondere poliert oder geläppt. Für ein leichtes Entformen nach dem Pressverfahren können auch Trenn- und/oder Antihaftmittel aufgetragen werden.

Zumindest die verformungswirksamen Teile einer gummielastischen Patrize oder eines gummielastischen Stempels werden beispielsweise aus Silikongummi gefertigt. Auch die Patrize oder der Stempel kann heizbar sein.

Die Temperatur zur Verformung des konsolidierten zwischen Werkzeug und Stempel eingelegten Materials richtet sich nach den Erweichungs- oder Schmelztemperaturen des ersten Materials. Die Temperatur zur Verformung und Konsolidierung liegt vorteilhaft unter dem Schmelzpunkt und insbesondere unter der Kristallisationstemperatur des ersten Materials. Beispielsweise für Polyamide und dabei vorzugsweise Polyamid 12 sind Temperaturen von 70°C bis 160°C zweckmässig, wobei Temperaturen von 110°C bis 150°C vorteilhaft sind.

Die Pressdrücke liegen beispielsweise bei 25 bis 100 bar, zweckmässig bei 40 bis 60 bar und insbesondere bei 50 bar. Entsprechend der Dicke des textilen Flächengebildes und der Anzahl der gemeinsam verpressten Lagen kann die Dicke der erfindungsgemässen Formkörper gewählt werden. Typische Dicken von Formkörpern sind beispielsweise von 0,5 bis 5 mm. Die Dicke innerhalb eines Formkörpers kann variiert werden. Die Formkörper können beispielsweise profilartige Strukturteile oder auch blechförmige Teile (sog. Organobleche) usw. sein.

Die Formkörper nach vorliegender Erfindung können an Fahrzeugen für Wasser, Strasse oder Schiene oder an stationären Bauten Verwendung finden. Beispiele für solche Teile sind Türen, Hauben, Seitenteile, Front- und Heckschürzen, Stossflächen, Verkleidungen, Zwischenwände, Verstärkungen oder Halterungen an Fahrzeugkarosserien; Paneele, Wände, Zwischenwände, Böden, Decken oder Teile davon, an Bussen oder Eisenbahnwagen, Verkleidungen, Zwischenwände usw. in Schiffen, Verkleidungen, Zwischenwände, Stellwände, Boden- oder Deckenelemente an Aussenfassaden oder im Innenausbau von an stationären Bauten, wie Gebäuden usw. Bevorzugte Anwendungen sind Türen, Hauben, Seitenteile, Front- und Heckschürzen, Stossflächen, Bodengruppen und Dächer oder Teile davon für Personenkraftwagen und leichte Nutzfahrzeuge.

### Beispiel:

1. Eine Fasermatte mit einem Flächengewicht von 500 g/cm² aus 4 Lagen eines Satin-4-1 Gewebes mit einer 0°/90° Faserorientierung aus Stapelfaser-Hybridgam, im wesentlichen aus 44 Vol.-% Polyamid-Stapelfasem und 56 Vol.-% Kohlenstoff-Stapelfasern einer mittleren Länge von 80 mm wird auf einen Rahmen aufgelegt durch IR-Strahlung innerhalb 75 sec. auf ca. 220°C aufgeheizt und während ca. 10 sec zur Konsolidierung bei dieser Temperatur gehalten. Die Polyamid-Stapelfasern verlieren dabei ihre Struktur und formen sich zu einer die Kohlenstofffasern umhüllenden Matrix. Dieses vorbeheizte Zwischenprodukt wird auf das auf ca. 150°C aufgeheizte Werkzeug aufgelegt, randseitig mit einem Niederhalter festgelegt und der Stempel mit der gummielastischen formgebenden Oberfläche in das Werkzeug abgesenkt. Die Schliesszeit der Presse beträgt etwa 3 sec, der angewendete Druck 50 bar und die Verweilzeit unter Druck in der Presse 5 sec. Beim Pressvorgang verformt sich das Zwischenprodukt aus der Fasermatte plastisch. Die gewünschten Konturen des Formkörpers werden aus der Matrix durch die Negativform des Werkzeuges und durch den Stempel geformt. Die Kohlenstoff-Fasern verstrecken, resp. verlängern, sich während des Pressvorganges durch den Fasergleiteffekt unter Dickenabnahme entsprechend der Verformungstiefe des Werkzeuges. Die Negativform des Werkzeuges bietet eine kegelförmige Vertiefung an. Das Zwischenprodukt aus der Fasermatte wird durch den Stempel in die Vertiefung eingepresst, wobei sich die Stapelfasern des zweiten Materials entsprechend deren Lage in der kegelförmigen Vertiefung um bis zu 35% ihrer ursprünglichen Länge verlängen. Die ursprüngliche Faserorientierung des Gewebes bleibt dabei erhalten. Nach der Druckentlastung des Stempels kann der fertige Formkörper dem Werkzeug entnommen werden und fallweise durch Entgraten und/oder durch andere Behandlungen, wie Lackieren. Überziehen von Folien und dergl. weiter bearbeitet werden. Die Dicke des Formkörpers beträgt ca. 1,5 mm.

## Patentansprüche

1. Faserverstärkter Formkörper geformt aus einem textilen Flächengebilde als Gewebe aus wenigstens zwei Fasermaterialien, wobei das Gewebe aus einem Hybridgarn aus Stapelfasern ist und die Stapelfasern des Hybridgarns aus einem ersten Material oder aus ersten Materialien und aus einem zweiten oder aus zweiten Materialien sind und der Formkörper eine Matrix, die das wiedererstarrte Produkt aus in einen plastischen Zustand überführten Stapelfasern aus wenigstens einem thermoplastischen ersten Material ist, und, in der Matrix eingebettet, gerichtete Fasern in Form von Stapelfasern aus wenigstens einem zweiten Material, und die Stapelfasern des zweiten Materials aus anorganischen Fasern sind, wobei ein Erweichungs-, Schmelz- oder Zersetzungspunkt der Stapelfasern aus dem zweiten Material über dem Erweichungs- oder Schmelzpunkt des ersten Materials liegt, enthält, wobei die Faserorientierung des zweiten Materials in der Matrix der Faserorientierung des textilen Flächengebildes entspricht
**dadurch gekennzeichnet, dass**
das Gewebe aus einem Gemisch von Stapelfasern aus wenigstens zwei Materialien ist, wobei das Gewebe aus einem Hybridgam aus Stapelfasern ist und die Stapelfasern des Hybridgarns aus einem ersten Material oder aus ersten Materialien und aus einem zweiten oder aus. zweiten Materialien sind, und die Stapelfasern aus wenigstens einem thermoplastischen ersten Material mit 60 bis 30 % Anteil, bezogen auf das Volumen, und aus wenigstens einem zweiten Material aus anorganischen Fasern mit 40 bis 70 % Anteil, bezogen auf das Volumen, sind.

2. Formkörper nach Anspruch 1, **dadurch gekennzeichnet, dass** die Stapelfasern des ersten Materials eine mittlere Länge von 10 bis 150 mm, zweckmässig 30 bis 120 mm, vorzugsweise 60 bis 100 mm und insbesondere 75 bis 85 mm aufweisen.

3. Formkörper nach Anspruch 1, **dadurch gekennzeichnet, dass** die Stapelfasern des zweiten Materials eine mittlere Länge von 10 bis 150 mm, zweckmässig 30 bis 120 mm, vorzugsweise 60 bis 100 mm und insbesondere 75 bis 85 mm aufweisen.

4. Formkörper nach Anspruch 1, **dadurch gekennzeichnet, dass** die Stapelfasern aus dem ersten thermoplastischen Material Polyamide, vorzugsweise Polyamid 12, Polyester, Polycarbonate, Polyurethane, Polyharnstoff, Polyolefine, Polystyrole, Polyacrylnitcile, Polyvinylchlorid, Polyvinylidenchlorid, Polyvinylalkohol oder Polytetrafluorethylen enthält oder daraus bestehen.

5. Formkörper nach Anspruch 1, **dadurch gekennzeichnet, dass** das zweite Material anorganische Stapelfasern, aus Glas, Schlacke, Stein, Keramik, Quarz, Kieselglas, Bor, Siliciumcarbid, Bomitrid, Borcarbid, Aluminiumoxid, Zirkoniumoxid, Stahl, Aluminium, Wolfram, vorzugsweise Kohlenstoff, Graphit oder einkristalliner Korund und Siliciumcarbid enthält oder daraus besteht.

6. Formkörper nach Anspruch 1, **dadurch gekennzeichnet, dass** der Temperaturbereich des Erweichungs-, Schmelz- oder Zersetzungspunkt der Stapelfasern aus dem zweiten Material wenigstens 5 %, zweckmässig 10 % und insbesondere 30 % über dem Erweichungs- oder Schmelzpunkt des ersten Materials liegt.

7. Formkörper nach Anspruch 1, **dadurch gekennzeichnet, dass** im Fonnkörper die Stapelfasern aus dem zweiten Material als Gewebe in der Matrix, die das wiedererstarrte Produkt aus in einen plastischen Zustand überführten Stapelfasern aus dem thermoplastischen ersten Material ist, eingebettet sind.

8. Formkörper nach Anspruch 1, **dadurch gekennzeichnet, dass** im Formkörper die Stapelfasern aus dem zweiten Material, bezogen auf das Volumen, 40 bis 70 %, zweckmässig 50 bis 60 % und vorzugsweise 53 bis 59 %, und entsprechend die Matrix aus dem thermoplastischen ersten Material, bezogen auf das Volumen, 60 bis 30 % , zweckmässig 50 bis 40 % und vorzugsweise 47 bis 41 %, betreffen.

9. Formkörper nach Anspruch 1, **dadurch gekennzeichnet, dass** der Formkörper die Matrix aus dem oder den thermoplastischen ersten Material oder Materialien ist, welche in der Matrix eingebettet, die gerichteten Fasern in Form von Stapelfasern aus dem oder den zweiten Material oder Materialien enthält, wobei die Faserorientierung des zweiten Materials in der Matrix der Faserorientierung des textilen Flächengebildes entspricht, und die Stapelfasern des zweiten Materials oder der zweiten Materialien in der Matrix durch Streckung dünner sind als im textilen Flächengebilde.

10. Verfahren zur Herstellung von Formkörpern geformt aus textilen Flächengebilden mit gerichteten Fasern als Gewebe aus wenigstens zwei Fasermaterialien, gemäss Anspruch 1, wobei das Gewebe aus einem Hybridgarn aus Stapelfasern ist und die Stapelfasern des Hybridgarns aus einem ersten Material oder aus ersten Materialien und aus einem zweiten oder aus zweiten Materialien sind, und die Stapelfasern aus wenigstens einem thermoplastischen ersten Material mit 60 bis 30 % Anteil, bezogen auf das Volumen, und wenigstens einem zweiten Material aus anorganischen Fasern mit 40 bis 70 % Anteil, bezogen auf das Volumen, sind, vorgeheizt, bis das erste Material erweicht oder aufgeschmolzen ist und anschliessend in ein Werkzeug gebracht und unter Druckbeaufschlagung zur Formgebung bei konstanter erhöhter Temperatur von Werkzeug und Stempel, die in einen Bereich unterhalb des Erweichungs- oder Schmelzpunkt des ersten Materials liegt, zum Formkörper verformt wird.

11. Verfahren zur Herstellung von Formkörpern nach Anspruch 10, **dadurch gekennzeichnet, dass** das textile Flächengebilde unter Streckung bei Dickenabnahme der Stapelfasern des zweiten Materials bei gegenüber dem textilen Material gleichbleibender Faserorientierung, zum Formkörper verformt wird.

12. Verfahren zur Herstellung von Formkörpern nach Anspruch 10, **dadurch gekennzeichnet, dass** die Druckbeaufschlagung zur Formgebung isostatisch erfolgt.

13. Verwendung der Formkörper gemäss Anspruch 1 für Fahrzeuge für Wasser, Strasse oder Schiene oder Teile davon, oder für stationäre Bauten oder Teile davon.

## Claims

1. Fibre-reinforced moulded part made from a textile fabric in the form of a woven fabric made of at least two fibre materials, wherein the woven fabric is made of a hybrid yarn of staple fibres, the staple fibres of the hybrid yarn are made of a first material or first materials and a second material or second materials and the moulded part contains a matrix, which is the resolidified product of plasticised staple fibres made of at least one thermoplastic first material, and, embedded in the matrix, oriented fibres in the form of staple fibres made of at least one second material, the staple fibres of the second material being made of inorganic fibres, a softening, melting or decomposition point of the staple fibres made of the second material being higher than the softening or melting point of the first material and the fibre orientation of the second material in the matrix corresponding to the fibre orientation of the textile fabric, **characterised in that** the woven fabric is made of a mixture of staple fibres made of at least two materials, wherein the woven fabric is made of a hybrid yarn of staple fibres, the staple fibres of the hybrid yarn are made of a first material or first materials and a second material or second materials, the staple fibres made of at least one thermoplastic first material make up 60 to 30 % in relation to volume and the staple fibres made of at least one second material made of inorganic fibres make up 40 to 70 % in relation to volume.

2. Moulded part according to claim 1, **characterised in that** the staple fibres of the first material have an average length of 10 to 150 mm, advantageously 30 to 120 mm, preferably 60 to 100 mm and, in particular, 75 to 85 mm.

3. Moulded part according to claim 1, **characterised in that** the staple fibres of the second material have an average length of 10 to 150 mm, advantageously 30 to 120 mm, preferably 60 to 100 mm and, in particular, 75 to 85 mm.

4. Moulded part according to claim 1, **characterised in that** the staple fibres made of the first thermoplastic material contain or consist of polyamides, preferably polyamide 12, polyesters, polycarbonates, polyurethanes, polyurea, polyolefins, polystyrenes, polyacrylonitriles, polyvinyl chloride, polyvinylidene chloride, polyvinyl alcohol or polytetrafluoroethylene.

5. Moulded part according to claim 1, **characterised in that** the second material contains or consists of inorganic staple fibres made of glass, slag, stone, ceramics, quartz, silica glass, boron, silicon carbide, boron nitride, boron carbide, aluminium oxide, zirconium oxide, steel, aluminium, tungsten, preferably carbon, graphite or monocrystalline corundum and silicon carbide.

6. Moulded part according to claim 1, **characterised in that** the temperature range of the softening, melting or decomposition point of the staple fibres made of the second material is at least 5 %, advantageously 10 % and, in particular, 30 % higher than the softening or melting point of the first material.

7. Moulded part according to claim 1, **characterised in that**, in the moulded part, the staple fibres made of the second material in the form of a woven fabric are embedded in the matrix, which is the resolidified product of plasticised staple fibres made of the thermoplastic first material.

8. Moulded part according to claim 1, **characterised in that**, in the moulded part, the staple fibres made of the second material make up 40 to 70 %, advantageously 50 to 60 % and preferably 53 to 59 % in relation to volume and, in a corresponding manner, the matrix made of the thermoplastic first material makes up 60 to 30 %, advantageously 50 to 40 % and preferably 47 to 41 % in relation to volume.

9. Moulded part according to claim 1, **characterised in that** the moulded part is the matrix made of the thermoplastic first material or materials and containing, embedded in the matrix, the oriented fibres in the form of staple fibres made of the second material or materials, the fibre orientation of the second material in the matrix corresponding to the fibre orientation of the textile fabric and the staple fibres of the second material or materials in the matrix being thinner than in the textile fabric as a result of stretching.

10. Method of producing moulded parts made from textile fabrics with oriented fibres in the form of a woven fabric made of at least two fibre materials according to claim 1, wherein the woven fabric is made of a hybrid yarn of staple fibres, the staple fibres of the hybrid yarn are made of a first material or first materials and a second material or second materials, the staple fibres made of at least one thermoplastic first material make up 60 to 30 % in relation to volume, the staple fibres made of at least one second material made of inorganic fibres make up 40 to 70 % in relation to volume, and the woven fabric is preheated until the first material softens or is melted and is then placed in a tool and formed into the moulded part with the application of pressure for shaping and with the tool and the punch at a constant elevated temperature in a range lower than the softening or melting point of the first material.

11. Method of producing moulded parts according to claim 10, **characterised in that** the textile fabric is formed into the moulded part by stretching the staple fibres of the second material and thereby reducing their thickness, the fibre orientation remaining constant with respect to the textile material.

12. Method of producing moulded parts according to claim 10, **characterised in that** the pressure for shaping is applied isostatically.

13. Use of the moulded parts according to claim 1 for vehicles for water, road or rail or parts thereof, or for stationary structures or parts thereof.

## Revendications

1. Corps moulé renforcé par des fibres, formé à partir d'un produit surfacique textile sous forme de tissu en au moins deux matériaux de fibres, le tissu étant en un fil hybride en fibres discontinues, et les fibres discontinues du fil hybride étant en un premier matériau ou des premiers matériaux ou en un deuxième matériau ou en des deuxièmes matériaux, et le corps moulé étant une matrice qui est le produit resolidifié à partir de fibres discontinues amenées dans un état plastique à partir d'au moins un premier matériau thermoplastique, et contient, noyées dans la matrice, des fibres orientées sous forme de fibres discontinues en au moins un deuxième matériau, et les fibres discontinues du deuxième matériau étant en fibres inorganiques, un point de ramollissement, de fusion ou de décomposition des fibres discontinues constituées par le deuxième matériau étant situé au-dessus du point de ramollissement ou de fusion du premier matériau, l'orientation des fibres du deuxième matériau dans la matrice correspondant à l'orientation des fibres du produit surfacique textile,
**caractérisé en ce que**
le tissu est constitué par un mélange de fibres discontinues en au moins deux matériaux, le tissu étant en un fil hybride en fibres discontinues, et les fibres discontinues du fil hybride étant en un premier matériau ou en des premiers matériaux et en un deuxième matériau ou en des deuxièmes matériaux, et les fibres discontinues étant en au moins un premier matériau thermoplastique avec une part de 60 à 30 %, rapportée au volume, et en au moins un deuxième matériau en fibres inorganiques avec une part de 40 à 70 %, rapportée au volume.

2. Corps moulé selon la revendication 1, **caractérisé en ce que** les fibres discontinues du premier matériau présentent une longueur moyenne de 10 à 150 mm, judicieusement de 30 à 120 mm, de préférence de 60 à 100 mm et en particulier de 75 à 85 mm.

3. Corps moulé selon la revendication 1, **caractérisé en ce que** les fibres discontinues du deuxième matériau présentent une longueur moyenne de 10 à 150 mm, judicieusement de 30 à 120 mm, de préférence de 60 à 100 mm et en particulier de 75 à 85 mm.

4. Corps moulé selon la revendication 1, **caractérisé en ce que** les fibres discontinues du premier matériau thermoplastique contiennent des polyamides, de préférence polyamide 12, polyester, polycarbonate, polyuréthanne, polycarbamide, polyoléfine, polystyrène, nitrure de polyacrylonitrile, chlorure de polyvinyle, chlorure de polyvinylidène, alcool polyvinylique ou polytétrafluoroéthylène, ou sont constituées par ceux-ci.

5. Corps moulé selon la revendication 1, **caractérisé en ce que** le deuxième matériau contient des fibres discontinues inorganiques en verre, laitier, pierre, céramique, quartz, verre de quartz, bore, carbure de silicium, nitrure de bore, carbure de bore, oxyde d'aluminium, oxyde de zirconium, acier, aluminium, tungstène, de préférence en carbone, graphite ou corindon monocristallin et en carbure de silicium, ou est constitué par celles-ci.

6. Corps moulé selon la revendication 1, **caractérisé en ce que** la plage de température du point de ramollissement, du point de fusion ou du point de décomposition des fibres discontinues du deuxième matériau est au moins de 5 %, judicieusement de 10 % et en particulier de 30 % au-dessus du point de ramollissement ou du point de fusion du premier matériau.

7. Corps moulé selon la revendication 1, **caractérisé en ce que** les fibres discontinues constituées par le deuxième matériau sont noyées dans le corps moulé sous forme de tissu dans la matrice, qui est le produit resolidifié en fibres discontinues constituées par le premier matériau thermoplastique et amenées à un état plastique.

8. Corps moulé selon la revendication 1, **caractérisé en ce que** dans le corps moulé, les fibres discontinues constituées par le deuxième matériau constituent 40 à 70 % du volume, judicieusement 50 à 60 %, et de préférence 53 à 59 %, et de manière correspondante, la matrice constituée par le premier matériau thermoplastique constitue 50 à 30 % du volume, judicieusement 50 à 40 % et de préférence 47 à 41 %.

9. Corps moulé selon la revendication 1, **caractérisé en ce que** la matrice constituée par le ou les premier(s) matériau(x) thermoplastique(s) qui contient les fibres orientées sous forme de fibres discontinues constituées par le ou par les deuxième(s) matériau(x) noyées dans la matrice, l'orientation des fibres du deuxième matériau dans la matrice correspond à l'orientation des fibres du produit surfacique textile, et les fibres discontinues du ou des deuxième(s) matériau(x) dans la matrice sont, par étirage, plus minces que dans le produit surfacique textile.

10. Procédé de fabrication de corps moulés formés à partir de produits surfaciques textiles avec des fibres orientées sous forme de tissu en au moins deux matériaux de fibres, selon la revendication 1, dans lequel le tissu est un fil hybride en fibres discontinues et les fibres discontinues du fil hybride sont constituées par un premier matériau ou par des premiers matériaux et par un deuxième matériau ou par des deuxièmes matériaux, et les fibres discontinues sont constituées par au moins un premier matériau thermoplastique avec une part de 60 à 30 %, rapportée au volume, et par au moins un deuxième matériau en fibres inorganiques avec une part de 40 à 70 %, rapportée au volume, ledit tissu est préchauffé jusqu'à ce que le premier matériau se ramollisse ou fonde et est ensuite mis dans un outil et il est déformé pour devenir un corps moulé en mettant l'outil et le poinçon sous pression pour le façonnage, à une température élevée constante, qui est située dans une plage au-dessous du point de ramollissement ou du point de fusion du premier matériau

11. Procédé de fabrication de corps moulés selon la revendication 10, **caractérisé en ce que** le produit surfacique textile est déformé en corps moulé par étirage et diminution d'épaisseur des fibres discontinues du deuxième matériau, l'orientation des fibres restant la même par rapport au matériau textile.

12. Procédé de fabrication de corps moulés selon la revendication 10, **caractérisé en ce que** la mise sous pression pour le façonnage a lieu de manière isostatique.

13. Utilisation de corps moulés selon la revendication 1 pour des véhicules pour l'eau, la route ou les rails ou pour des parties de ceux-ci ou pour des édifices stationnaires ou pour des parties de ceux-ci.
